# EUROPEAN PATENT APPLICATION

(11) **EP 3 486 658 A1**
(43) Date of publication of application: **22.05.2019**
(21) Application number: 17827342.1
(22) Date of filing: 20.06.2017
(51) Int. Cl.: G01N 35/00, F25B 21/02, F25D 17/02

(54) **AUTOMATIC ANALYSIS DEVICE**

(30) Priority: 14.07.2016 JP 2016139033
(71) Applicant: Hitachi High-Technologies Corporation, Tokyo 105-8717 (JP)
(72) Inventor: WATANABE Michiharu, Tokyo 100-8280 (JP); SASAKI Shigeyuki, Tokyo 100-8280 (JP); OKUSA Takenori, Tokyo 105-8717 (JP); ISOSHIMA Nobuyuki, Tokyo 105-8717 (JP)
(74) Representative: Strehl Schübel-Hopf & Partner
(86) International application number: PCT/JP2017/022611
(87) International publication number: WO 2018/012212

(57) **Abstract**

An object of the present invention is to provide an automatic analyzer having a rapid start-up of a heat block while precisely controlling a temperature of a reaction solution.

In the automatic analyzer equipped with a reaction-vessel-holding part that holds a reaction vessel, a heat block having a heat source to heat the reaction vessel, and a cooling system having a low temperature region where a temperature is lower than that of outside air and a high temperature region where a temperature is higher than that of outside air, an outer peripheral part of or below the reaction-vessel-holding part is defined as a heat transfer space, there are provided a heat transfer passage connecting the heat transfer space and the high temperature region, a heat medium circulating through the high temperature region, the heat transfer passage, and the heat transfer space, and a flow rate control means configured to control a flow rate of the heat medium in the heat transfer passage, and a temperature detection means is provided on a downstream side of the high temperature region.

## Description

### Technical Field

The present invention relates to an automatic analyzer that is used for medical analysis works.

### Background Art

An automatic analyzer detects a component contained in a specimen by generating a reaction solution in which the specimen and a reagent are mixed in a reaction vessel, accelerating reaction by holding the reaction solution at a predetermined temperature, and then measuring a luminous intensity or the like of the reaction solution. The automatic analyzer is used in blood tests in the medical field, for biochemical examinations for measuring enzymes and the like and immunological examinations for measuring specific antigens and the like for specific diseases.

For the purpose above, the automatic analyzer is provided with a heat block capable of holding the reaction solution at a predetermined temperature. In the heat block, in order to stably manage the temperature of the reaction solution, heating using hot water, a heater, or the like is performed. PTL 1 discloses an automatic analyzer that supplies a fluid with adjusted temperature, to a heat block in order to prevent an excessive temperature rise of the heat block.

### Citation List

### Patent Literature

PTL 1: JP 2012-132723 A

### Summary of Invention

### Technical Problem

There are two requirements for heating the heat block. The first is to stably promote the reaction by precisely controlling the temperature of the reaction solution within a range of ± 0.3°C or less. The second is to quickly raise the temperature of the heat block from a stop state to a temperature stable state. For example, when an outside air temperature is 15°C and the reaction temperature is 37°C, it is necessary to raise the temperature by 22°C.

In the case of PTL 1 described above, in order to control the temperature of the heat block with high precision, a heat source having a low resolution and a high responsiveness is necessarily selected. Whereas, this kind of heat source has a problem that a maximum output is small and a start-up of the heat block is slow.

The present invention has been made in view of the above, and it is an object of the present invention to simultaneously achieve a rapid start-up of a heat block while precisely controlling a temperature of a reaction solution.

### Solution to Problem

In order to achieve the above object, the present invention employs a configuration described in the claims. As a specific example, there are provided: a first temperature control device configured to control a temperature of a first storage part that keeps a liquid to be used for an analysis warm; a second temperature control device configured to control a temperature of a second storage part that keeps another liquid to be used for the analysis cool, and including a heat dissipating device in a part; a first space in which a part is opened to outside and the heat dissipating device is disposed inside; an exhaust heat passage configured to discharge heat caused from the heat dissipating device in the first space to an outside of the automatic analyzer; a heat transfer passage configured to transfer heat caused from the heat dissipating device in the first space to a second space that accommodates the first storage part, via a first heat medium; a first temperature detection means configured to detect a temperature of the first heat medium; and a control device configured to control an amount of heat transferred from inside the first space to the heat transfer passage by controlling a flow rate of the first heat medium.

### Advantageous Effects of Invention

According to the present invention, it is possible to provide an automatic analyzer that achieves both a rapid start-up of activation and precise temperature control with a minimum required configuration.

### Brief Description of Drawings

FIG. 1 is a system configuration of a first embodiment.
FIG. 2 is a control flow of the first embodiment.
FIG. 3 is a system configuration of a second embodiment.
FIG. 4 is a control flow of the second embodiment.
FIG. 5 is a system configuration of a third embodiment.
FIG. 6 is a control flow of the third embodiment.
FIG. 7 is a system configuration of a fourth embodiment.
FIG. 8 is a control flow of the fourth embodiment.

### Description of Embodiments

Hereinafter, examples of the present invention will be described with reference to the drawings.

An automatic analyzer is used for biochemical examinations for measuring enzymes, lipids, electrolytes, and proteins contained in blood, and immunological examinations for measuring a disease specific antigen or antibody for viral infections, autoimmune diseases, hormones, tumor markers, inflammatory markers, and the like. A general automatic analyzer mixes blood as a specimen and a reagent in a reaction vessel, and holds the reaction vessel containing this mixed solution in a thermostatic chamber or an incubator, to cause reaction of a desired component with a marker. Thereafter, an amount and concentration of an analyte contained in the specimen is detected based on information such as an amount of change and a rate of change in an amount of transmitted light of the mixed solution in the reaction process, and an amount of light emitted from a reactant. Since both of high precision and rapidness are required for these analysis works, automatic processing in accordance with a predetermined sequence is executed.

A reagent bottle 63 containing a reagent to be used for the analysis is desirably held at a low temperature of 10 degrees or less in order to prevent deterioration. Therefore, in general, the automatic analyzer is provided with a reagent refrigerator 102 to store the reagent bottle 63 at a temperature lower than an outside air temperature. A temperature of the reagent refrigerator 102 is controlled by a heat medium (air, water, or the like) circulating between with a cooling system 101 so as to be always within a certain temperature range.

Whereas, the reaction vessel containing the mixed solution is desirably heated to a predetermined temperature range (e.g., 37 degrees) higher than the outside air temperature in order to cause stable analysis. Therefore, a heat block 100 is provided in the thermostatic chamber and the incubator.

### Example 1

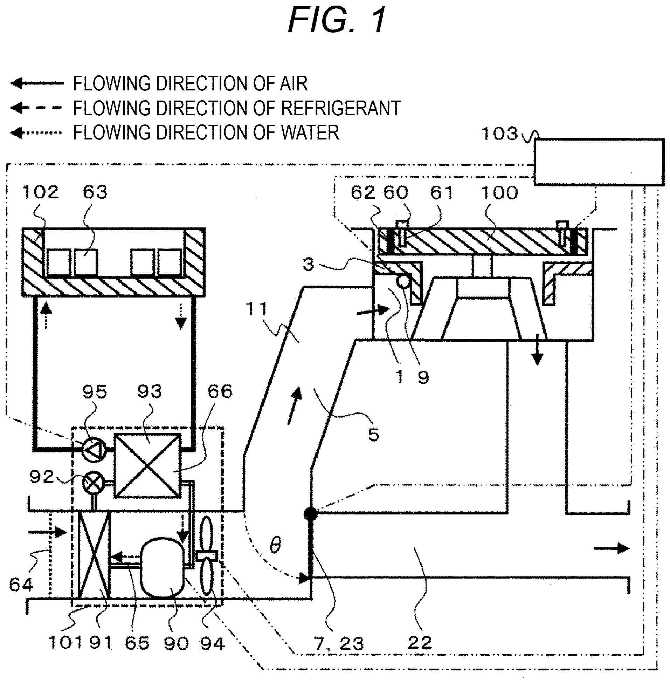

FIG. 1 shows a system configuration of an automatic analyzer according to the present invention. The automatic analyzer is constituted at least of the heat block 100 as a first temperature control device, a reagent refrigerator 102 as a second temperature control device, a cooling system 101, and a control device 103 configured to control each device.

The reagent refrigerator 102 is a cylindrical container with a closed bottom surface, and contains a reagent bottle 63 therein. A support material surrounding a side surface and a bottom surface of the reagent bottle 63 has a passage through which cooling water circulates as a heat medium to cool the reagent refrigerator 102.

The heat block 100 has a disc-shaped structure. The heat block 100 has a plurality of reaction-vessel-holding parts 61 on a circumference to hold a reaction vessel 60 for reaction of a specimen and a reagent. Inside the heat block 100, there is disposed a heater 62 capable of providing a heat generation effect through application of a voltage. Further, the heat block 100 is rotated by a motor (not shown).

The cooling system 101 includes a refrigerant loop in which a refrigerant is sealed in a passage connecting a compression device 90, a heat dissipating device 91, an expansion device 92, and a cooling device 93 in a ring shape; and a cooling water loop in which the cooling water as a second heat medium is sealed in a passage connecting the cooling device 93, a cooling water pump 95, and the reagent refrigerator 102 in a ring shape. Meanwhile, the refrigerant applied to the refrigerant loop of the cooling system 101 includes R134a, R410a, and the like, but various refrigerants can be selected since the effect of the present invention does not depend on the refrigerant. Further, in this example, a capillary tube consists of a thin tube is assumed as the expansion device 92, but a capillary tube that can control an electromagnetic expansion valve or the like can also be selected.

The cooling device 93 of the cooling system 101 has a structure in which the cooling water and the refrigerant exchange heat. For example, there are a structure in which a passage of the cooling water and a passage of the refrigerant are in parallel contact, a structure in which a passage of the refrigerant is disposed inside a passage of the cooling water, and a structure in which a passage the refrigerant is passing through inside a tank storing the cooling water.

The heat dissipating device 91 and the compression device 90 of the cooling system 101 are disposed in a first space communicating with an outside of the device. By arranging an exhaust fan 94 on a downstream side of the compression device 90 in this space, an air passage through which air circulates from the outside of the device to the exhaust fan 94 is formed. Between the outside of the device and an inlet of the heat dissipating device 91, there is disposed a filter 64 to prevent entering of foreign matters such as dust. The downstream side of the exhaust fan 94 is connected to an exhaust heat air passage 22, and the exhaust heat air passage 22 communicates with the outside of the device.

In this example, in order to obtain the effect intended by the invention, a heat transfer body 3 whose main raw material is aluminum is disposed below the heat block 100, at a position overlapping with a horizontal direction length of the reaction-vessel-holding part 61. A space opposed to the heat block 100 with respect to the heat transfer body 3 is defined as a heat transfer space 1, and an air passage disposed with the heat dissipating device 91 and the compression device 90 of the cooling system 101 is connected with the heat transfer space 1 by a transport passage 5, which is a heat transfer passage. This causes the air passage disposed with the heat dissipating device 91 and the compression device 90 to be connected to two passages of the exhaust heat air passage 22 and the transport passage 5. In order to adjust an air volume flowing to both, an air volume ratio adjusting damper 23 is disposed as a flow rate control means 7 of the transport passage 5. Further, in order to adjust an opening degree θ of the air volume ratio adjusting damper 23 to the transport passage 5, a temperature detection means 9 is disposed on a lower surface of the heat transfer body 3.

The control device 103 is connected to the compression device 90, the exhaust fan 94, the heater 62, the air volume ratio adjusting damper 23, the temperature detection means 9, and the cooling water pump 95 via electrical wiring. Upon start-up of the cooling system 101, the control device 103 mainly controls the compression device 90, the exhaust fan 94, and the cooling water pump 95. Further, when recovering exhaust heat of the heat transfer space 1, the control device 103 performs control by acquiring temperature information from the temperature detection means 9, performs a comparison operation based on this information, and transmitting a control signal to mainly the air volume ratio adjusting damper 23.

First, a state before a start-up of the heat block 100 will be described as an operation of Example 1. Immediately before the start-up of the heat block 100, the cooling system 101 is operating. At this time, the compression device 90 driven by the control device 103 is performing a compression operation of the refrigerant, and the expansion device 92 is performing an expansion operation of the refrigerant. This causes the high-temperature and high-pressure refrigerant in the compression device 90 to circulate to the heat dissipating device 91, and to dissipate heat to the space disposed with the heat dissipating device 91 and the compression device 90. The refrigerant having finished the heat dissipation circulates to the expansion device 92, and cools the water in the cooling device 93 after being decompressed to low temperature and low pressure, and at the same time the refrigerant itself is heated.

In an air passage of the cooling system 101, the exhaust fan 94 driven by the control device 103 causes air to flow into the heat dissipating device 91 from an outside of the device through the filter 64. After passing through the compression device 90 and the exhaust fan 94, the air flowing out of the heat dissipating device 91 reaches the air volume ratio adjusting damper 23. If the opening degree θ of the air volume ratio adjusting damper 23 is set to 0 via the control device, the exhaust heat of the heat dissipating device 91 is entirely discharged to the outside of the device. With the above mechanism, a refrigerant passage from the compression device 90 to the expansion device 92 of the cooling system 101 becomes a high temperature region 65 whose temperature is higher than the outside air temperature, while a refrigerant passage from the expansion device 92 to an inlet of the compression device 90 becomes a low temperature region 66 whose temperature is lower than the outside air temperature.

In the cooling device 93, water is cooled by heat exchange between the low temperature refrigerant and the cooling water. The cooled water is sent out to the reagent refrigerator 102 by the cooling water pump 95 driven by the control device 103. Since the reagent bottle 63 is stored in the reagent refrigerator 102, the cooling water cools the reagent bottle 63 and a space in which the reagent refrigerator 102 is installed. The water heated from these objects to be cooled in the reagent refrigerator 102 flows into the cooling device 93 again, so that the reagent refrigerator 102 is continuously cooled by this repetition.

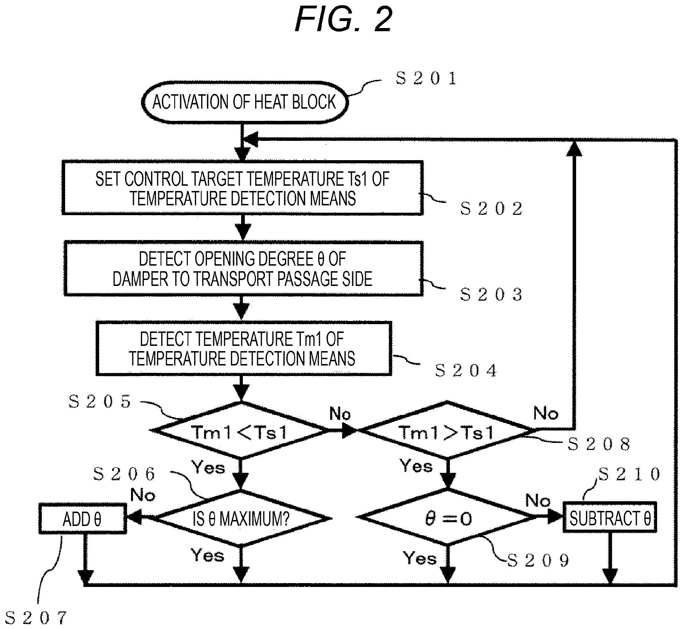

An operation of this example will be described with reference to FIG. 2. A flow of FIG. 2 shows a control method when the heat block 100 is activated while the cooling system 101 is in operation.

After activation of the heat block 100 in step S201, a control target temperature Ts1 of the temperature detection means 9 installed below the heat transfer body 3 is set (step S202). Specifically, Ts1 is desirably lower than a reaction target temperature of 37°C by an amount from an allowable variation of a reaction temperature to a sum of the allowable variation of the reaction temperature and an allowable fluctuation range of an ambient temperature. For example, when the allowable variation of the reaction temperature is ± 0.3°C and the allowable fluctuation range of the ambient temperature is ± 2°C, Ts1 is in an appropriate range from 36.7°C to 34.7°C. The reason will be described later. Next, in steps S203 and S204, the opening degree θ of the air volume ratio adjusting damper 23 and a temperature Tm1 of the temperature detection means 9 are detected.

The detected temperature Tm1 is compared with the set control target temperature Ts1 (step S205). Immediately after activation of the heat block 100, since a temperature of a periphery of the heat block 100 is close to an outside air temperature, Tm1 is usually lower than Ts1, and the first branch of the control flow is true (YES) in many cases. In this case, in order to increase a heat dissipation amount of the high temperature region 65 to be recovered to the heat transfer body 3, it is determined whether or not the opening degree θ of the air volume ratio adjusting damper 23 is a maximum (step S206). When it is not a maximum, the opening degree θ of the air volume ratio adjusting damper 23 is added to increase the air volume to the transport passage 5 (step S207). This causes the heat of the high temperature region 65 to circulate through the transport passage 5 to the heat transfer space 1, to heat the heat transfer body 3. As the heat transfer body 3 is heated, a space around the heat block 100 is heated to indirectly heat the heat block 100.

Meanwhile, the reason why the heat block 100 is indirectly heated by the heat transfer body 3 is to reduce a risk of impurities such as dust entering the reaction liquid when the air flow flowing in from the transport passage 5 flows to an upper part of the reaction vessel 60. Therefore, instead of the heat transfer body 3, a means to remove impurities from a flow field near the heat block 100 may be additionally provided. As the means to remove impurities from the flow field near the heat block 100, there are the filter 64, a dust separating device, and the like.

In this example, the heat transfer body 3 is configured such that a main material is aluminum, and a horizontal direction of the reaction-vessel-holding part 61 overlaps with the heat transfer body 3. That is, at least for a part where the reaction vessel is held, the heat transfer body is arranged so as to be positioned under the part over the horizontal direction. The reason why the material of the heat transfer body 3 is aluminum is to increase an amount of heat transferred to the heat block 100 by lowering a thermal resistance when the heat applied from the lower surface of the heat transfer body 3 reaches the upper surface of the heat transfer body 3. Therefore, various kinds of heat transfer bodies can be selected as long as a thermal resistance is low. Specifically, copper having high thermal conductivity, thin resin, or the like may be used. The reason why a dimension of the heat transfer body 3 is made to overlap with the horizontal direction of the reaction-vessel-holding part 61 is to intensively heat the vicinity of the reaction vessel 60 whose temperature is desired to be stabilized.

The air having finished heating the heat transfer body 3 flows out from an exhaust port provided in a lower part of the heat transfer space 1, passes through the exhaust heat air passage 22, and is then discharged to the outside of the device. By this series of flows, the heat of the high temperature region 65 is recovered to the heat transfer body 3.

When the outside air temperature is close to a reaction target temperature Ts1, the temperature Tm1 of the temperature detection means 9 becomes high with respect to the control target temperature Ts1 with the lapse of time, and the conditional branch at step S205 is false (No) and the conditional branch at step S208 is true (YES). At this time, it is confirmed whether or not the air volume ratio adjusting damper 23 is fully closed (θ = 0) (step S209). When it is not θ = 0, the opening degree θ of the air volume ratio adjusting damper 23 is subtracted to reduce the air volume of the transport passage 5 (step S210).

Next, effects of this example will be described. Since a main purpose of the heater 62 disposed in the heat block 100 is to keep the reaction solution at 37°C, it is sufficient that the heater 62 can output a same amount of heat as the heat released by the heat block 100 to the surroundings. In addition, in order to control the temperature of the reaction solution within the range of ± 0.3°C, it is required for the heater 62 to have a small amount of change in voltage around a unit signal, that is, to be able to increase the resolution. From the above, the output of the heater 62 installed in the heat block 100 of as low as several watts to several tens of watts is appropriate. Whereas, since a heat source having a small output has a feature that it takes time for heating with a large temperature elevation range, providing a separate heat source is desirable to accelerate the activation of the heat block 100.

An amount of heat of exhaust heat from the high temperature region 65 is generally a sum of an input power to the compression device 90 and an amount of cooling heat in the cooling device 93, based on the operating principle of the heat pump cycle. Further, an amount of cooling heat of the cooling device 93 is a sum of an amount of heat received from the object to be cooled (reagent container) in the reagent refrigerator 102, and an amount of heat of a heated pipe connecting the cooling device 93 and the reagent refrigerator 102 inside the device. Therefore, the amount of heat released from the heat dissipating device 91 is several times larger than the amount of heat required for cooling the reagent refrigerator 102, and is generally several tens of watts or more. Therefore, it is larger than the output required for the heat block 100. Since such a heat source has a slow response and the control resolution is coarse, a rate of temperature reduction is slow when a temperature near the heat block 100 rises too much, and therefore it is unsuitable for precise temperature control.

Therefore, by setting the control target temperature Ts1 of the temperature detection means 9 to a value lower than the reaction target temperature, utilizing the heat dissipation of the cooling system 101 for adjustment of the ambient temperature around the heat block 100, and utilizing the heater 62 provided in the heat block 100 for fine adjustment of the temperature of the reaction vessel 60, both quick activation of the heat block 100 and precise control can be achieved. Here, since the reaction temperature has an allowable variation, it is necessary to lower the control target temperature Ts1 by at least the allowable variation, in order to adjust the temperature of the reaction vessel. Further, since the ambient temperature has an allowable fluctuation range, there is a possibility that the exhaust heat temperature from the high temperature region 65 rises to exceed the reaction target temperature when the ambient temperature unexpectedly rises. In this case, the temperature rise can be avoided by adjusting the opening degree θ of the air volume ratio adjusting damper 23, but the control target temperature Ts1 may also be set lower in advance. Therefore, it is to be desirable that Ts1 is set lower by an amount from the allowable variation of the reaction temperature to the sum of the allowable variation of the reaction temperature and the allowable fluctuation range of the ambient temperature.

Meanwhile, a heat pump type device is assumed as the cooling system 101 in this example, but another type of operation principle may be used. Specifically, even in a case of using the cooling system 101 by a Peltier device, the same effect as this example can be obtained since a heat dissipation surface becomes the high temperature region 65 and a cooling surface becomes the low temperature region 66, and a sum of an amount of cooling heat and the input power is released from the heat dissipation surface.

Further, the temperature detection means 9 is disposed below the heat transfer body 3 in this example, but the temperature detection means 9 may be installed in any region as long as it is located downstream of the high temperature region 65. For example, in a case where the temperature detection means 9 is installed immediately after the exhaust fan 94, the heat can be recovered by setting the opening degree θ of the air volume ratio adjusting damper 23 to 0 when the measured temperature Tm1 of the temperature detection means 9 is higher than the control target temperature Ts1, while setting the opening degree θ of the air volume ratio adjusting damper 23 to a maximum when the temperature Tm1 of the temperature detection means 9 is lower than the control target temperature Ts1.

Further, in the above description, the control target temperature Ts1 of the temperature detection means 9 is made constant, but it is also possible to perform processing such as, for example, setting Ts1 higher than the reaction temperature until the temperature of the reaction vessel reaches 37°C, and updating Ts1 to a value lower than 37°C when the temperature of the reaction vessel reaches the target temperature.

### Example 2

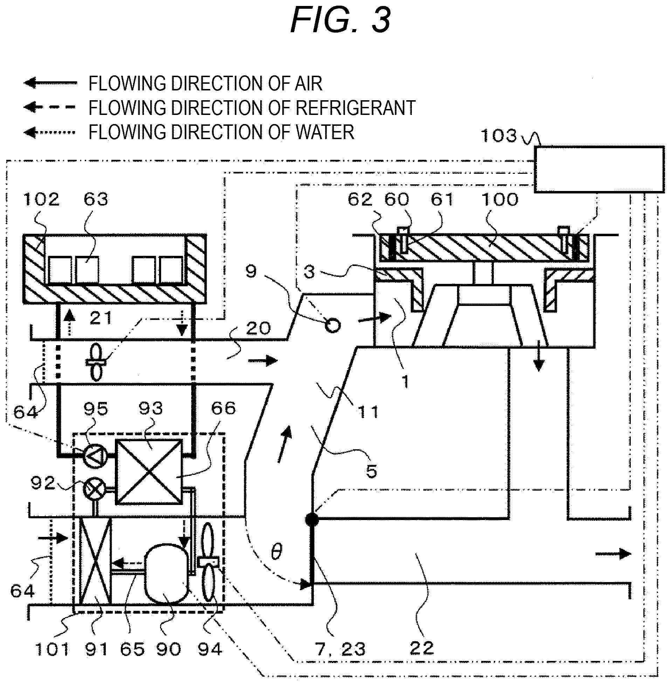

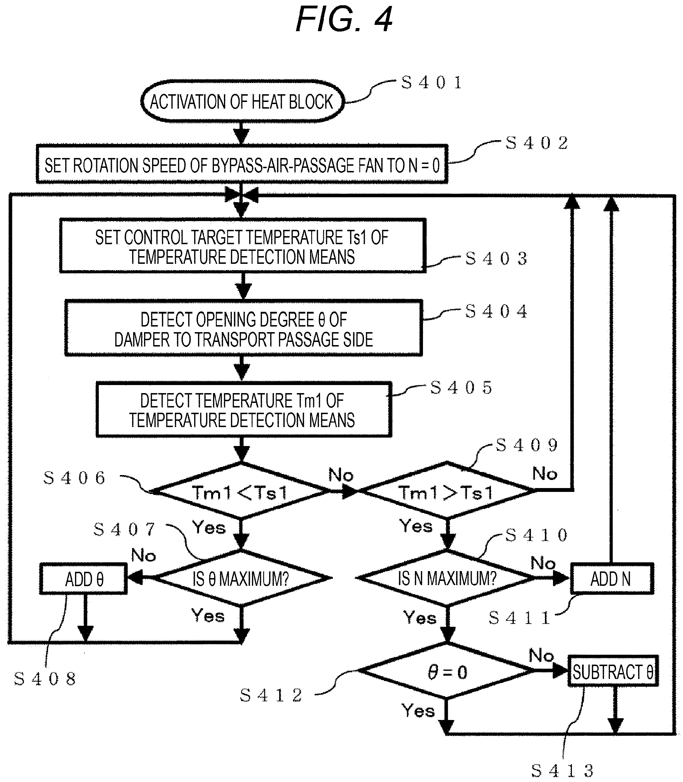

Example 2 will be described with reference to FIGS. 3 and 4. FIG. 3 shows a system configuration of Example 2.

Example 2 is obtained by adding a bypass air passage 20 connecting a middle of a transport passage 5 and an outside of a device, and a bypass-air-passage fan 21 in a middle of the bypass air passage 20, to Example 1. The bypass-air-passage fan 21 is connected through electric wiring so as to be able to be controlled by a control device 103, and a drive rotation speed is controlled by a command from the control device 103. A temperature detection means 9 is provided on a downstream side of a junction of the bypass air passage 20 and the transport passage 5.

An operation of Example 2 will be described with reference to FIG. 4. Similarly to Example 1, a cooling system 101 is operating immediately before a start-up of a heat block 100.

First, the heat block 100 is activated (step S401), a rotation speed N of the bypass-air-passage fan 21 is set to 0 (step S402), and a suction of outside air is stopped. From here, an operation (steps S403 to S409) until a temperature Tm1 of the temperature detection means 9 rises to a control target temperature Ts1 is the same as in Example 1, and therefore the description will be omitted.

When the temperature Tm1 of the temperature detection means 9 exceeds the control target temperature Ts1 in step S409, first, it is determined whether or not the rotational speed N of the bypass-air-passage fan 21 is a maximum (step S410). When N is not a maximum value, the rotation speed N of the bypass-air-passage fan 21 is added, and a temperature of air flowing into the heat block 100 is adjusted by mixing warm air from a high temperature region 65 with the outside air (step S411). As a result, an amount of air transmitted to a heat transfer space 1 when the temperature Tm1 of the temperature detection means 9 exceeds the control target temperature Ts1 becomes larger than that in Example 1, facilitating temperature control of a heat transfer body 3.

When the temperature Tm1 of the temperature detection means 9 exceeds the control target temperature Ts1, and the rotation speed N of the bypass-air-passage fan 21 is a maximum (Yes in step S409 and Yes in step 410), an opening degree θ of an air volume ratio adjusting damper 23 is subtracted in order to lower the temperature of the heat transfer space 1 (step 412, step S413). This reduces an air volume in the transport passage 5 and increases an air volume in the exhaust heat air passage 22. If a space of the heat block 100 is unexpectedly abnormally heated, then the rotation speed N of the bypass-air-passage fan 21 approaches the maximum and the opening degree θ of the air volume ratio adjusting damper 23 approaches zero, so that the heat transfer space 1 is to be cooled with the outside air.

As described above, Example 2 is a system that can perform temperature control of the heat transfer body 3 more stably than that in Example 1.

### Example 3

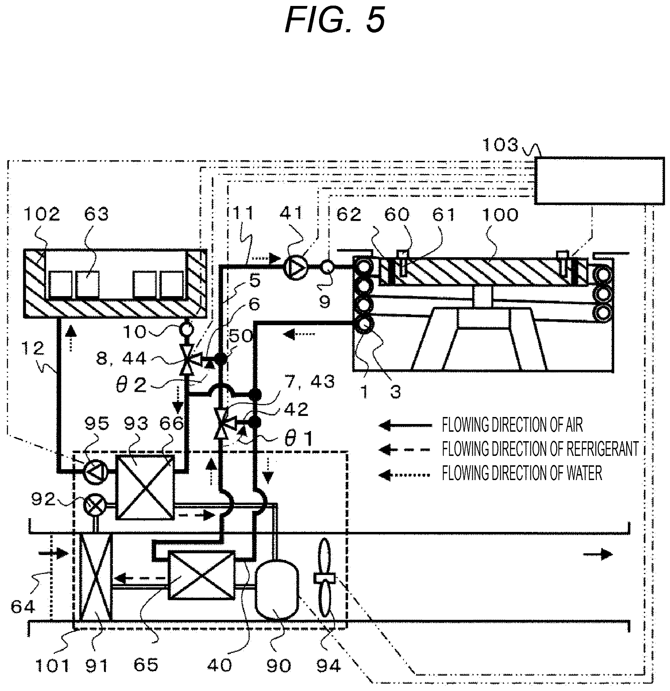

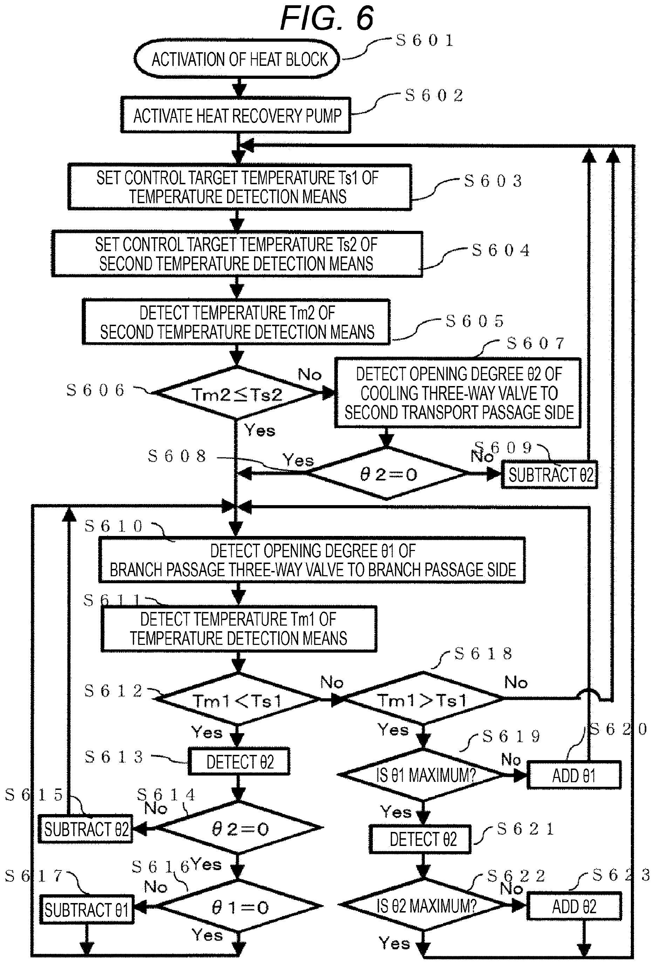

Example 3 will be described with reference to FIGS. 5 and 6. In Example 3, a reagent refrigerator 102, a heat block 100, and a cooling system 101 are the same as those in Example 1, while two water loops are used for recovering exhaust heat and cooling a heat transfer space 1.

A configuration of this example will be described with reference to FIG. 5. Example 3 includes; a high temperature passage 40 in contact with a high temperature region 65 of the cooling system 101; a first loop in which water as a heat medium 11 is circulated in a passage connecting a transport passage 5, a branch passage three-way valve 43 as a flow rate control means 7, a heat recovery pump 41, a temperature detection means 9, and the heat transfer space 1 in a ring shape; and a second loop in which water as a second heat medium 12 is circulated in a passage connecting a cooling device 93, a cooling water pump 95, the reagent refrigerator 102, a second temperature detection means 10, and a cooling three-way valve 44 as a second flow rate control means 8 in a ring shape. In addition to the controllable elements in Example 1, a control device 103 is connected with the branch passage three-way valve 43, the heat recovery pump 41, the cooling three-way valve 44, and the second temperature detection means 10 via electrical wiring. The control device 103 performs arithmetic processing based on temperature information acquired from the temperature detection means 9 and the second temperature detection means 10, and transmits a control signal mainly to the branch passage three-way valve 43 and the cooling three-way valve 44.

The first loop will be described. Between a compression device 90 and a heat dissipating device 91 of the cooling system 101, there is provided a heat exchange part 65 of a passage through which water as the heat medium 11 circulates, and a passage through which a refrigerant circulates. Similarly to the cooling device 93, the heat exchange part 65 is configured such that the passages of the refrigerant and the water are in parallel with each other, and the passage through which the water circulates is the high temperature passage 40 whose temperature is higher than that of the outside air.

The heat transfer space 1 is a space inside a tubular heat transfer body 3 arranged in a spiral shape so as to overlap with a side surface of the heat block 100. A middle of the transport passage 5 connecting the high temperature passage 40 and the heat transfer space 1 is bypassed by a branch passage 42, and the branch passage three-way valve 43 is installed as the flow rate control means 7 at a branch point on an inlet side of the heat recovery pump 41. The branch passage three-way valve 43 is arranged so as to be able to adjust a switching opening degree θ1 between an outlet side of the high temperature passage 40 and an outlet side of the branch passage 42. This configuration allows control such that increasing a flow rate of the high temperature passage 40 by reducing the opening degree θ1 of the branch passage three-way valve 43 when it is desired to increase an amount of heat of heat recovery, while increasing θ1 when the amount of heat of heat recovery is excessive on the contrary.

The second loop will be described. Between an outlet side of the reagent refrigerator 102 and an inlet side of the cooling device 93, and between the branch passage three-way valve 43 and the inlet side of the heat recovery pump 41 are connected by a second transport passage 6, and a junction of the second transport passage 6 and the transport passage 5 becomes a temperature mixing part 50. The cooling three-way valve 44 is installed as the second flow rate control means 8 at an intersection point of a passage of the second heat medium 12 flowing out of the reagent refrigerator 102 and the second transport passage 6. The cooling three-way valve 44 is arranged so as to be able to adjust a switching opening degree θ2 between the inlet side of the cooling device 93 and an inlet side of the second transport passage 6. Further, between an outlet side of the heat transfer space 1 and a branch point of the branch passage 42 are connected to a passage between the cooling three-way valve 44 and the cooling device 93. With this configuration, the heat medium can be cooled through the temperature mixing part 50 by opening the cooling three-way valve 44 to the second transport passage 6 side, that is, by increasing θ2 when a temperature of the heat medium flowing through the transport passage 5 is higher than a control target temperature Ts1, and conversely, the cooling amount can be reduced by reducing θ2 when the temperature of the heat medium is low. An operation of Example 3 will be described in accordance with a flow of FIG. 6. Since a state immediately before activation of the heat block 100 is the same as that in Example 1, the description will be omitted.

After activation of the heat block 100 (step S601), the heat recovery pump 41 is activated in order to recover exhaust heat of the heat pump. (Step S602) Next, the control target temperature Ts1 of the temperature detection means 9 and the control target temperature Ts2 of the second temperature detection means 10 are set (steps S603, S604). Here, for a control target temperature Ts2 of the second temperature detection means 10, for example, a maximum temperature at which the reagent refrigerator 102 can be kept equal to or less than a predetermined temperature is set.

After setting of the control target temperature, first, a temperature Tm2 of the second temperature detection means 10 is detected (step S605). At this point, it is determined whether or not the temperature Tm2 of the second temperature detection means 10 is higher than the control target temperature Ts2 of the second temperature detection means 10 (step S606). When the temperature Tm2 of the second temperature detection means 10 is higher, a flow rate of the second transport passage 6 is reduced by subtracting θ2 as long as the opening degree θ2 of the cooling three-way valve 44 to the second transport passage 6 is not 0, and the process returns to step S603 (steps S607 to S609), since there is a possibility that the reagent refrigerator 102 cannot be sufficiently cooled. By this operation, cooling of the reagent refrigerator 102 is performed preferentially.

When the temperature Tm2 of the second temperature detection means 10 is lower than the control target Ts2 in step S606, the opening degree θ1 of the branch passage three-way valve 43 to the branch passage 42 and a temperature Tm1 of the temperature detection means 9 are detected (step S610, step S611). When the temperature Tm1 of the temperature detection means 9 is lower than the control target temperature Ts1 of the temperature detection means 9 (Yes in step S612), it is necessary to increase the heat recovery amount. Therefore, the opening degree θ2 of the cooling three-way valve 44 is detected (step S613), and θ2 is subtracted to reduce a supply amount of cooling water as long as θ2 is not 0 (step S614, step S615). Further, when θ2 is 0, as long as θ1 is not 0, θ1 is subtracted to increase a flow rate of the high temperature passage 40 and increase the heat collection amount (step S616, step S617).

Whereas, when the temperature Tm1 of the temperature detection means 9 exceeds the control target temperature Ts1 in step S612, it is necessary to reduce the heat recovery amount. Therefore, as long as θ1 of the branch passage three-way valve 43 is not a maximum, θ1 is added to increase a flow rate of the branch passage 42 (steps S618 to S620). In addition, when the temperature Tm1 of the temperature detection means 9 is higher than the control target temperature Ts1 despite θ1 being the maximum (Yes in step S618 and Yes in step S619), the cooling water flowing out from the reagent refrigerator 102 is sent to the temperature mixing part 50 (steps S621 to S623) by detecting θ2 and adding θ2 unless θ2 is the maximum. This operation can be used as a cooling means when the temperature of the heat block 100 rises unintentionally.

The above flow performs heat recovery to the heat transfer space 1, while giving priority to the cooling of the reagent refrigerator 102. As the temperature of the heat transfer space 1 rises, the heat block 100 is heated through the spiral passage as the heat transfer body 3 and the space around the spiral passage, so that the effect of the present invention can be obtained.

Meanwhile, the heat medium 11 and the second heat medium 12 are made of water in this example. However, as another method, the implementation can also be made by providing a heat exchange part or the like configured to mix a temperature on an outlet side of the cooling water to be circulated to the reagent refrigerator and a temperature of the transport air passage 6, in Example 1. Therefore, in this example, the effect can be obtained irrespective of a type of the heat medium.

### Example 4

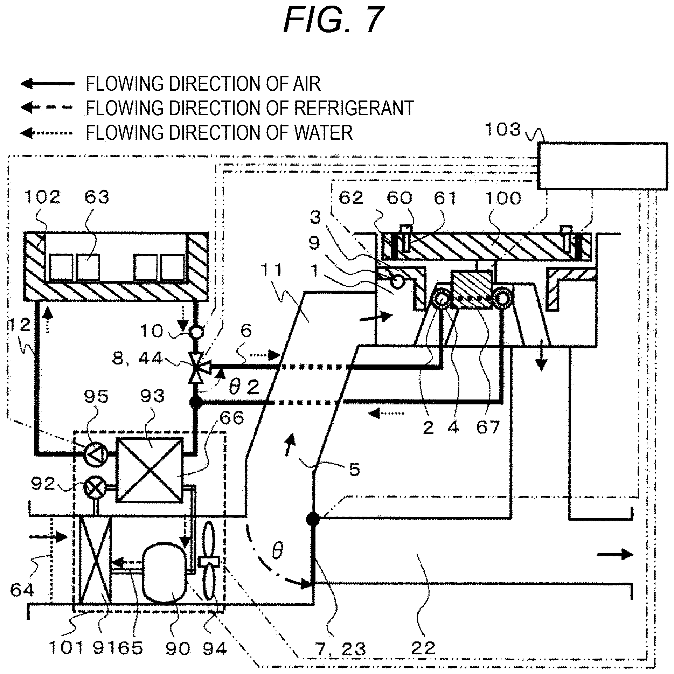

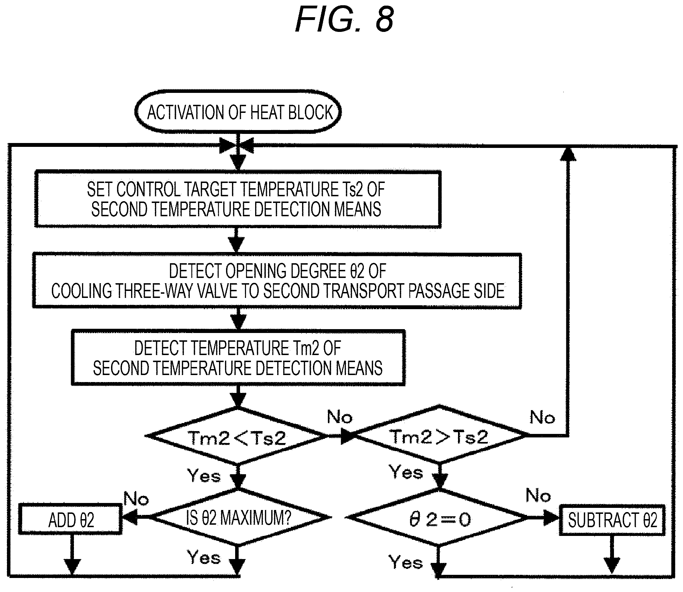

Example 4 will be described with reference to FIGS. 7 and 8. Example 4 is obtained by adding a passage (second transport passage 6) to Example 1, at an outlet side of cooling water of a reagent refrigerator 102.

In Example 4, between an outlet side of a second heat medium 12 of the reagent refrigerator 102 and a cooling device 93, there are disposed a second temperature detection means 10 arranged along a flow of the second heat medium 12, and a branch point to the transport passage 6. At the branch point to the transport passage 6, a cooling three-way valve 44 as a second flow rate control means 8 is disposed. The cooling three-way valve 44 is arranged so as to be able to adjust a switching opening degree θ2 between an inlet side of the cooling device 93 and an inlet side of the second transport passage 6.

The second transport passage 6 is connected to a second heat transfer space 2 inside a tubular second heat transfer body 4 in contact with a heat generating element 67 installed below a heat block 100. An outlet of the second heat transfer space 2 is connected between the cooling three-way valve 44 and the cooling device 93 after passing through the second transport passage 6.

The heat generating element 67 installed below the heat block 100 corresponds to a device that performs work by applying electric power and releases a part of the applied energy as a heat loss. In this example, a motor that rotates the heat block 100 corresponds to this.

In addition to the controllable elements of Example 1, a control device 103 is connected to the cooling three-way valve 44, the second temperature detection means 10, and the motor as the heat generating element 67 via electrical wiring. While driving the motor, the control device 103 performs arithmetic processing based on temperature information acquired from a temperature detection means 9 and the second temperature detection means 10, and transmits a control signal mainly to an air volume ratio adjusting damper 23 and the cooling three-way valve 44.

An operation of this example will be described. In this example, control of an opening degree θ of the air volume ratio adjusting damper 23, which is a flow rate control means 7, is performed with the flow of FIG. 2, and control of the opening degree θ2 of the cooling three-way valve 44, which is the second flow rate control means 8, is performed with the flow of FIG. 8.

When the heat block 100 is activated, a control target temperature Ts2 of the second temperature detection means 10 is set, the opening degree θ2 of the cooling three-way valve 44 to the second transport passage 6 and a temperature Tm2 of the second temperature detection means 10 are detected.

When the temperature Tm2 of the second temperature detection means 10 is lower than the control target temperature Ts2, θ2 is added to increase a flow rate of the second transport passage 6 as long as θ2 is not a maximum, since there is a margin in an amount of cooling heat caused by the cooling system 101 with respect to an amount of cooling heat of the reagent refrigerator 102. This increases a flow rate of cooling water in the second heat transfer space 2 arranged around the heat generating element 67, thereby increasing an amount of cooling heat of the heat generating element 67 via the tubular second heat transfer body 4, and reducing the temperature.

Whereas, when the temperature Tm2 of the second temperature detection means 10 is larger than the control target temperature Ts2, θ2 is subtracted to reduce the amount of cooling heat of the heat generating element 67 as long as θ2 is not zero, since an amount of heat required for cooling the reagent refrigerator 102 is to be insufficient.

The above mechanism enables temperature control to be stably performed by cooling the heat generating element 67 with excess cooling capability, and suppressing local heating of the heat block 100, while giving priority to the cooling of the reagent refrigerator 102.

### Reference Signs List

- 1: heat transfer space
- 2: second heat transfer space
- 3: heat transfer body
- 4: second heat transfer body
- 5: transport passage
- 6: second transport passage
- 7: flow rate control means
- 8: second flow rate control means
- 9: temperature detection means
- 10: second temperature detection means
- 11: heat medium
- 12: second heat medium
- 20: bypass air passage
- 21: bypass-air-passage fan
- 22: exhaust heat air passage
- 23: air volume ratio adjusting damper
- 40: high temperature passage
- 41: heat recovery pump
- 42: branch passage
- 43: branch passage three-way valve
- 44: cooling three-way valve
- 50: temperature mixing part
- 60: reaction vessel
- 61: reaction-vessel-holding part
- 62: heater
- 63: reagent bottle
- 64: filter
- 65: high temperature region
- 66: low temperature region
- 67: heat generating element
- 90: compression device
- 91: heat dissipating device
- 92: expansion device
- 93: cooling device
- 94: exhaust fan
- 95: cooling water pump
- 100: heat block
- 101: cooling system
- 102: reagent refrigerator
- 103: control device

## Claims

1. An automatic analyzer comprising:
a first temperature control device configured to control a temperature of a first storage part that keeps a liquid warm;
a second temperature control device configured to control a temperature of a second storage part that keeps another liquid cool, and including a heat dissipating device in a part;
a first space in which a part is opened to outside and the heat dissipating device is disposed inside;
an exhaust heat passage configured to discharge heat caused from the heat dissipating device in the first space to an outside of the automatic analyzer;
a heat transfer passage configured to transfer heat caused from the heat dissipating device in the first space to a second space that accommodates the first storage part, via a first heat medium;
a first temperature detection means configured to detect a temperature of the first heat medium; and
a control means configured to control an amount of heat transferred from inside the first space to the heat transfer passage by controlling a flow rate of the first heat medium.

2. The automatic analyzer according to claim 1, further comprising:
a circulation passage through which a second heat medium that controls a temperature of the second storage part is circulated between the second storage part and the second temperature control device;
another heat transfer passage formed branched from the circulation passage through which the second heat medium having passed through the second storage part is circulated, and communicating with the first storage part;
a second flow rate control means configured to control a flow rate of the second heat medium circulating through the another heat transfer passage; and
a second temperature detection means configured to detect a temperature of the second heat medium in the another heat transfer passage.

3. The automatic analyzer according to claim 1,
wherein a heat transfer body is disposed at an outer peripheral part of or below a region that holds the liquid in the first storage part, and
the heat transfer passage heats the heat transfer body via the first heat medium, to indirectly heat the liquid held in the first storage part.

4. The automatic analyzer according to claim 3,
wherein the heat transfer body has a shape that covers a size in a horizontal direction of a part where the liquid is held, at least at a side of a region that holds the liquid or in a region that holds the liquid.

5. The automatic analyzer according to claim 1,
wherein the second temperature control device is a heat pump type cooling device.

6. The automatic analyzer according to claim 1,
wherein the second temperature control device is a cooling device using a Peltier device.

7. The automatic analyzer according to claim 1,
wherein the control means controls to increase a flow rate of the first heat medium flowing through the heat transfer passage in a case where a temperature detected by the first temperature detection means is lower than a preset target temperature.

8. The automatic analyzer according to claim 1,
wherein the control means controls to reduce a flow rate of the first heat medium flowing through the heat transfer passage in a case where a temperature detected by the first temperature detection means is higher than a preset target temperature.

9. The automatic analyzer according to claim 2,
wherein temperature control of the second temperature detection means is performed prior to temperature control of the first temperature detection means.

10. The automatic analyzer according to claim 1,
wherein the first heat medium is a gas,
there are provided a bypass air passage connecting an external space of the automatic analyzer and a middle of the heat transfer passage, and
a bypass air volume control means configured to adjust an air volume of the bypass air passage,
the first temperature detection means is provided on a downstream side of a junction of the heat transfer passage and the bypass air passage, and
the control means controls the bypass air volume means to cause a temperature of the first temperature detection means to be a target value.

11. The automatic analyzer according to claim 1,
wherein the first heat medium is a gas,
there is provided an air volume ratio control means configured to control an air volume ratio between the exhaust heat passage and the heat transfer passage, and
the air volume ratio control means is controlled in a case where a temperature of the first temperature detection means is higher than a target.

12. The automatic analyzer according to claim 1,
wherein there are provided a first heat medium passage connecting the second space, the heat transfer passage, and the first space in a ring shape,
a liquid feeding device configured to feed a liquid sealed in the first heat medium passage,
a branch passage configured to bypass a middle of the heat transfer passage in parallel with an inlet and outlet of the first space, and
a branch flow rate control means configured to control a flow rate ratio of the first space and the branch passage,
the first temperature detection means is provided on a downstream side of a junction of an outlet of the first space and an outlet of the branch passage, and
the branch flow rate control means is controlled to cause a temperature of the first temperature detection means to be a target value.

13. The automatic analyzer according to claim 2,
wherein there is provided a temperature mixing part configured to average temperatures of the first heat medium and the second heat medium, and
the first temperature detection means is provided on a downstream side of the temperature mixing part of the heat transfer passage, or the first temperature detection means is provided on a downstream side of the temperature mixing part of the another heat transfer passage.

14. The automatic analyzer according to claim 2,
wherein a connecting part of the another heat transfer passage and the second space, or a connecting part of the another heat transfer passage and another space adjacent to the second space is arranged in a region where a temperature is higher than a control target of the first temperature detection means.
